(19) Europäisches Patentamt

European Patent Office

Office européen des brevets

(11) **EP 1 653 058 A1**

(12) **EUROPEAN PATENT APPLICATION**

(43) Date of publication:
**03.05.2006 Bulletin 2006/18**

(51) Int Cl.:
*F01N 3/20* (2006.01)  *F01N 3/08* (2006.01)
*F01N 11/00* (2006.01)  *F02D 41/00* (2006.01)

(21) Application number: **05017968.8**

(22) Date of filing: **18.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.10.2004 JP 2004312619**

(71) Applicant: **HITACHI, LTD.**
**Chiyoda-ku**
**Tokyo 100-8280 (JP)**

(72) Inventors:
• **Katogi, Kozo,**
**Hitachi Ltd Intell.Property Group**
**Chiyoda-ku**
**Tokyo 100-8220 (JP)**
• **Ichihara, Takanobu,**
**Hitachi Ltd Int.Property Group**
**Chiyoda-ku**
**Tokyo 100-8220 (JP)**

(74) Representative: **Beetz & Partner**
**Patentanwälte**
**Steinsdorfstrasse 10**
**D-80538 München (DE)**

(54) **Engine exhaust gas cleaning method and system**

(57) The present invention relates to an engine exhaust gas cleaning method and system, which can effectively reduce emission amounts of particular components, such as NOx, contained in exhaust gas by adding an additive, such as urea water or light oil, into an exhaust passage (140), which is adaptable for a reduction of the cleaning rate caused by deterioration of a catalyst (144), which can always maintain a high cleaning rate during acceleration and deceleration as well, and which can minimize environmental pollution with use of the additive in the least necessary amount. The engine exhaust gas cleaning system comprises a catalyst (144) for removing a particular component, represented by NOx, contained in exhaust gas of an engine (100), an additive adding unit for adding, to the exhaust gas, an additive for reducing the particular component represented by NOx, and an EGR amount adjusting unit for adjusting an EGR amount.

**FIG.1**

EP 1 653 058 A1

**Description**

BACKGROUND OF THE INVENTION

1. Field of the Invention

The present invention relates to a method and a system for cleaning exhaust gas of an_engine. More particularly, the present invention relates to an engine exhaust gas cleaning method and system which are adapted for an engine provided with a catalyst for removing particular components, such as NOx, contained in exhaust gas and an additive adding unit for adding, to the exhaust gas, an additive for reducing the particular components.

2. Description of the Related Art

Recently, even severer standards have been applied in emission control. Exhaust gas of a diesel engine contains HC, CO, NOx, PM, etc. PM is removed by using a filter (DPF = Diesel Particulate Filter) that is able to trap the PM. HC and CO can be removed by a catalyst having an oxidation action. On the other hand, an emission amount of NOx cannot be reduced to 0 even with modification of engine control parameters, such as an amount of EGR (Exhaust Gas Recirculation) and the fuel injection timing. As seen from "Nikkei Mechanical", April 2002 (pp. 84-86), JP-A-2003-314254, etc., it is proposed to reduce NOx by adding (pumping or injecting) an additive, such as urea water or light oil, into an exhaust passage.

SUMMARY OF THE INVENTION

For the purpose of cleaning NOx, the known exhaust gas cleaning method uses an SCR (Selective Catalytic Reduction) catalyst that selectively removes NOx with urea water injected to an exhaust passage. However, it has hitherto been usual that no considerations are paid to a reduction of the cleaning rate caused by deterioration of the catalyst, and the reduction of the cleaning rate is compensated for by injecting, as an additive, urea water or ammonia water in large amount. In spite of urea water or ammonia water being substances present in the natural world, if a large amount of urea water or ammonia water is used in an engine exhaust system, there is a risk causing environmental pollution, such as an irritating odor of ammonia.
In view of the state of the art set forth above, it is an object of the present invention to provide an engine exhaust gas cleaning method and system, which can effectively reduce emission amounts of particular components, such as NOx, contained in exhaust gas by adding an additive, such as urea water or light oil, into an exhaust passage, which is adaptable for a reduction of the cleaning rate caused by deterioration of a catalyst, which can always maintain a high cleaning rate during acceleration and deceleration as well, and which can minimize environmental pollution with use of the additive in the least necessary amount.
To achieve the above object, the present invention basically provides a method for cleaning exhaust gas of an engine and an engine exhaust gas cleaning system according to the independent claims. The dependent claims relate to preferred embodiments.

The engine may include a catalyst for removing a particular component, represented by NOx, contained in the exhaust gas of the engine, an additive adding unit for adding, to the exhaust gas, an additive for reducing the particular component represented by NOx, and/or an EGR amount adjusting unit for adjusting an EGR amount, wherein the method may include a step of setting an addition amount of the additive and/or the EGR amount depending on an operating state.
In that case, the method may preferably include a step of setting the addition amount of the additive and/or the EGR amount depending on the operating state and/or deterioration of the catalyst with time.
In a preferable form, the method may include a step of regenerating the catalyst when a cleaning capability of the catalyst has reduced to a predetermined value or below.
In another preferable form, the method may include a step of increasing the EGR amount when the regeneration of the catalyst is determined as being insufficient.
In still another preferable form, the method may include steps of detecting an amount of the particular component in the exhaust gas downstream of the catalyst disposed in an exhaust passage, and/or modifying the addition amount of the additive depending on the amount of the detected particular component.
In still another preferable form, the method may include a step of storing a result of computing a modification amount for the addition amount of the additive in a different storage unit or a different storage area depending on an operating state.
In this case, preferably, the method may include at least one step of setting upper and lower limit values of the modification amount for the addition amount of the additive, and/or modifying engine control parameters in a direction to suppress emission of the particular component upon detection of arrival of the modification amount to the upper and lower limit values.

In still another preferable form, the method may include a step of setting upper and lower limit values of the modification amount for the addition amount of the additive, and/or modifying the EGR rate or fuel injection timing in a direction to suppress emission of the particular component upon detection of arrival of the modification amount to the upper and lower limit values.

In that case, preferably, the method may include a step of regenerating the cleaning capability of the catalyst upon detection of arrival of the modification amount to the upper and lower limit values.

In still another preferable form, the method may include a step of regenerating the cleaning capability of the catalyst by temporarily changing an amount of urea added as the additive from an amount ordinarily added.

Preferably, at least one of urea water, ammonia water, hydrogen gas, and/or fuel may be used as the additive.

In still another preferable form, the method may include a step of modifying the addition amount of the additive depending on an amount of change in the operating state with time.

Preferably, at least one of amounts of changes in an accelerator pedal depression amount, a throttle opening, the EGR amount, an intake air amount, and/or a fuel injection amount, and/or an output of an exhaust sensor may be used as the amount of change in the operating state with time.

In still another preferable form, the method may include steps of determining a relationship between an addition amount of the additive and an amount of the particular component in the exhaust gas downstream of the catalyst disposed in an exhaust passage, computing a cleaning rate of the particular component based on the determined relationship, and/or issuing an alarm indicating the occurrence of an abnormality in an exhaust gas cleaning system when the computed cleaning rate is outside a predetermined range.

In still another preferable form, the method may include steps of computing an emission amount of the particular component based on an output of an exhaust sensor disposed downstream of the catalyst in an exhaust passage, comparing the computed emission amount of the particular component with an estimated emission amount of the particular component obtained based on a relationship between an EGR amount or an EGR rate and an intake air amount, and/or modifying engine control parameters in a direction to suppress emission of the particular component when the emission amount of the particular component computed based on the exhaust sensor output is larger than the estimated emission amount.

In that case, the method may include at least one step of computing emission amounts of a plurality of components based on the exhaust sensor output, estimating emission amounts of the plurality of components based on the relationship between an EGR amount or an EGR rate and an intake air amount, comparing the estimated emission amounts with the computed emission amounts, and/or detecting an abnormality of an exhaust gas cleaning system for each of the different components.

Preferably, the plurality of components may be HC, CO and NOx components.

According to another aspect, the present invention may provide an engine exhaust gas cleaning system comprising a catalyst for removing a particular component, represented by NOx, contained in exhaust gas of an engine, an additive adding unit for adding, to the exhaust gas, an additive for reducing the particular component represented by NOx, and/or an EGR amount adjusting unit for adjusting an EGR amount, wherein the system may further comprise a control unit for controlling an addition amount of the additive and the EGR amount depending on an operating state and deterioration of the catalyst with time, and/or a catalyst regenerating unit for regenerating the catalyst when a cleaning capability of the catalyst has reduced to a predetermined value or below.

In that case, preferably, the control unit may increase the EGR amount when the regeneration of the catalyst is determined as being insufficient.

With the engine exhaust gas cleaning method and system of the present invention, it is possible to effectively reduce emission amounts of particular components, such as NOx, contained in exhaust gas by adding an additive, such as urea water or light oil, into an exhaust passage. Further, the method and system of the present invention are adaptable for a reduction of the cleaning rate caused by deterioration of a catalyst, can always maintain a high cleaning rate during acceleration and deceleration as well, and can minimize environmental pollution with use of the additive in the least necessary amount.

BRIEF DESCRIPTION OF THE DRAWINGS

Fig. 1 is a schematic view of an engine to which an engine exhaust gas cleaning method according to the present invention is applied;
Fig. 2 is a block diagram showing an internal configuration, etc. of a control unit;

Fig. 3 is a block diagram for explaining processing details executed in the control unit;

Fig. 4 is a graph showing the relationship between an NOx cleaning rate and temperature;

Fig. 5 is a graph showing a difference in cleaning rate between NO and $NO_2$;

Fig. 6 is a graph for explaining modification of an injection amount of urea water during a transition period;

Fig. 7 is a block diagram for explaining a catalyst generative process;

Fig. 8 is a time chart for explaining the catalyst generative process;

Fig. 9 is a block diagram for explaining EGR valve control;

Fig. 10 is a block diagram for explaining throttle valve control;

Fig. 11 is a block diagram for explaining the EGR valve control;

Fig. 12 is a time chart for explaining a known control method;

Fig. 13 is a time chart for explaining a control method according to the present invention;

Fig. 14 is a flowchart showing an EGR valve control routine;

Fig. 15 is a block diagram for explaining sensor diagnosis; and

Fig. 16 is a block diagram for explaining a diagnosis process.

DESCRIPTION OF THE PREFERRED EMBODIMENTS

An embodiment of the present invention will be described below with reference to the drawings.

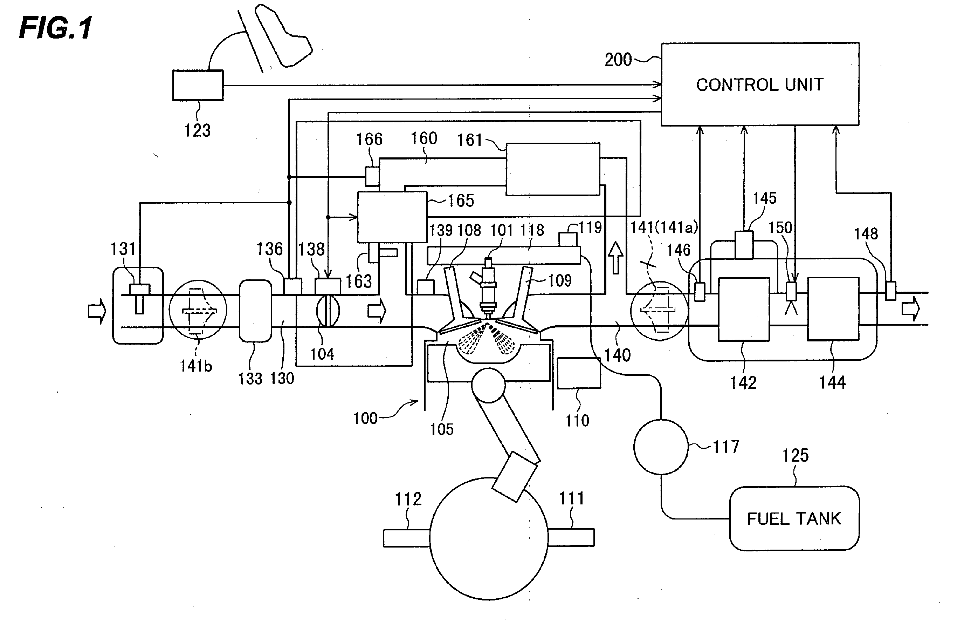

Fig. 1 is a schematic view of an engine to which an engine exhaust gas cleaning method according to the present invention is applied, including a control system for the engine.

An engine 100 is a vehicle-loaded diesel engine, for example, and includes an intake valve 108, an exhaust valve 109, a fuel injection valve (fuel injection nozzle) 101, an electronically controlled throttle valve 104, a water temperature sensor 110, a crank angle sensor 111, a cam angle sensor 112, etc. Fuel is transported from a fuel tank 125 by a high-pressure fuel pump 117, then stored in a common rail 118, and is injected into a combustion chamber 105 from the fuel injection valve 101. The fuel pressure in the common rail 118 is detected by a fuel pressure sensor 119 and is inputted to a control unit 200. A pressure boosted by the high-pressure fuel pump 117 is regulated by a fuel pressure control valve in response to a control signal from the control unit 200 so that the fuel is supplied to the fuel injection valve 101 under a predetermined pressure.

In an intake passage 130, there are disposed an impeller 141b of a turbocharger 141 and an intercooler 133. An air flowmeter 131, an intake temperature sensor 136, a throttle opening sensor 138, an intake pressure sensor 139, etc. are also disposed in the intake passage 130. In an exhaust passage 140, a turbine 141a of the turbocharger 141, a DPF 142 for trapping PM (particulate matters such as soot), a NOx removing catalyst (NOx adsorbing and occluding catalyst) 144, an exhaust temperature sensor 146, etc. are disposed successively in this order from the upstream side toward the downstream side. A pressure differential sensor 145 is further disposed for detecting a pressure difference between the downstream side and the downstream side of the DPF 142 in the exhaust passage 140, and a urea water injection valve 150 is disposed between the DPF 142 and the catalyst 144 in the exhaust passage 140. In addition, a NOx sensor 148 serving as an exhaust sensor is disposed downstream of the catalyst 144.

An EGR passage 160 is branched from the exhaust passage 140 at a point upstream of the turbine 141a and introduces a part of the exhaust gas to a point in the intake passage 130 downstream of the throttle valve 104. In the EGR passage 160, there are disposed an EGR cooler 161, an EGR valve 165 for adjusting the EGR amount, an EGR flow sensor 163 for detecting the EGR amount, a pressure sensor 166, etc. The EGR valve 165 is constituted by a stepping motor, a throttle valve, a sleeve valve, etc. so that a valve passage area of is variable.

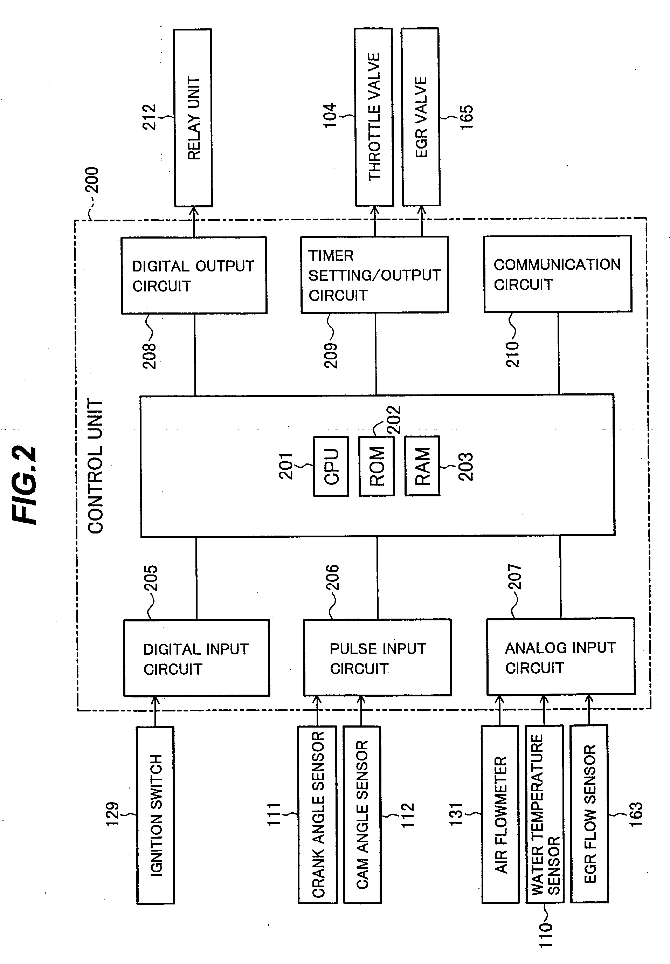

The control unit 200 is itself well known and comprises, as shown in Fig. 2, a CPU 201 for executing arithmetic and logical operations, a ROM 202 for storing programs executed by the CPU and data, a RAM 203 for temporarily storing data, a digital input circuit 205 for taking in signals supplied from switches and representing operating conditions, a pulse input circuit 206 for, by way of example, measuring the time interval of a pulse signal or counting the number of pulses within a predetermined time, an analog input circuit 207 for, by way of example, taking in analog voltages from sensors and executing A/D conversion of the analog voltages, a digital output circuit 208 for turning on/off each actuator in accordance with a processing result obtained in the CPU 201, a timer setting/output circuit 209, and a communication circuit 210. The communication circuit 210 serves to output data in the engine control unit to the exterior and to change an internal state of the engine control unit in accordance with a communication command inputted from the exterior.

Instead of measuring the pulse interval of a signal from the crank angle sensor 111 or the cam angle sensor 112, an engine revolution speed may be obtained by taking in, via the communication circuit 210, the engine revolution speed measured by another control unit.

In the turbocharger 141, the turbine 141a is rotated by the exhaust gas, and intake air is compressed by the impeller 141b coaxially coupled to the turbine 141a. The torque of the turbine 141a is variable by changing an area of the turbine 141a against which the exhaust gas strikes. For example, in a low revolution speed range, the exhaust-gas striking area is narrowed to increase the torque, and as the revolution speed shifts to a higher range, it is widened to reduce the torque. As a result, the supercharging power of the turbocharger 141 can be controlled.

With the above-described configuration, the control unit 200 determines an excess air ratio corresponding to lean burn in a steady mode based on the detected signals from the various sensors, such as the accelerator pedal opening (i.e., the amount by which an accelerator pedal is depressed), the engine revolution speed, and the water temperature. Then, the control unit 200 computes the fuel injection amount and the fuel injection timing per combustion cycle based on the excess air ratio and the intake air amount, thereby controlling the fuel injection valve 101.

In addition, the control unit 200 executes, for example, control for burning PM by increasing the exhaust gas temperature in accordance with an estimated value of the PM amount trapped by the DPF 142, control for changing the air-fuel ratio to be temporarily rich so that a larger amount of HC component is contained as a reducing component in the exhaust gas, and control for causing an HC component to be injected into the exhaust gas by additionally injecting fuel in the exhaust stroke of each cylinder.

To reduce the emission amount of NOx with the diesel engine control mentioned above, NOx is treated through an exhaust gas cleaning system constituted by the DPF 142, the catalyst 144, the urea water injection valve 150, etc.

For the treatment of NOx, a method comprising the steps of, for example, adsorbing or occluding NOx by using a NOx adsorbing catalyst that reacts with NOx and temporarily adsorbs NOx, and reducing NOx to $N_2$ with a reductant is used in many cases. Excess fuel (HC) or ammonia ($NH_3$) is used as the reductant. In order to properly treat the exhaust gas by mixing the reductant in the exhaust gas, an appropriate laxative must be supplied to the exhaust gas depending on the NOx amount. By performing a modification depending on the reaction coefficient of the exhaust gas cleaning system at the same time, the excess reductant can be avoided from leaking to the outside of the exhaust gas cleaning system.

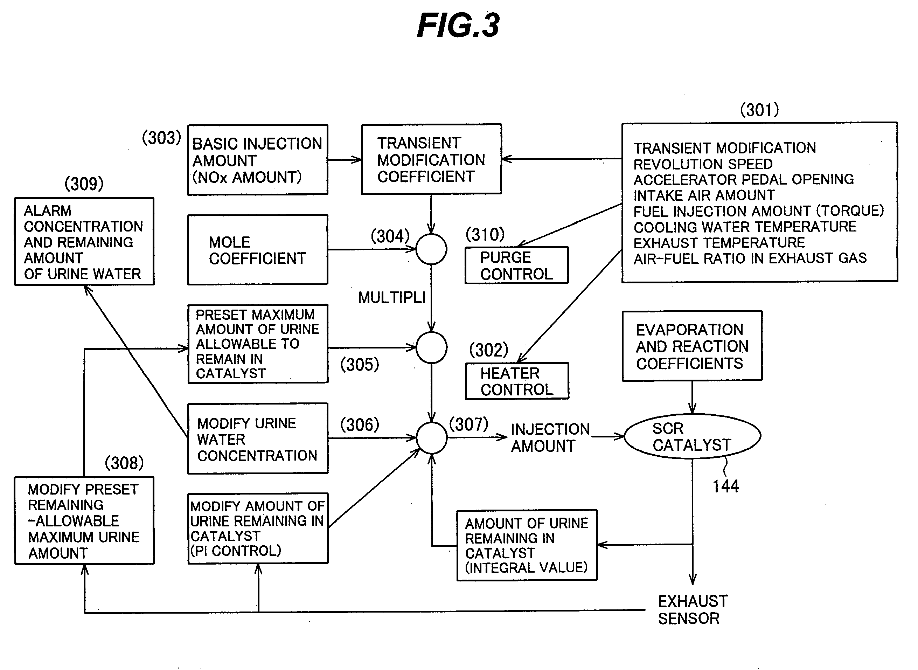

On the other hand, if the reductant is insufficient or the modification amount is too small, NOx does not fully react with the reductant and untreated NOx is exhausted. Fig. 3 shows a control block diagram. The following method is carried out as an exhaust gas cleaning method using the catalyst 144 (SCR catalyst).

The control unit 200 receives, as control input parameters, the engine revolution speed, the DPF temperature, the SCR catalyst inlet temperature, the urea water temperature, etc. and executes control depending on input values of those parameters relative to respective predetermined ranges (301).

For example, when the DPF temperature or the SCR catalyst temperature is not higher than a predetermined value (about 150°C), a heater is turned on to promote generation of ammonia from the urea water (302).

Then, a urea water pipe is air-purged to remove products generated during stop of the engine. In a warmed-up state where the engine cooling water temperature reaches a predetermined value or above, it is selected depending on the operating conditions whether to spray or stop the urea water.

The condition for spraying the urea water is determined based on the throttle condition, the intake air condition, the fuel injection amount condition, etc. For example, the urea water is sprayed when the throttle opening is not changed with time, when a vehicle is not in a deceleration state, when the intake air amount is not larger than a predetermined value, or when the fuel injection amount is not smaller than a predetermined value. Also, upon a shift from a state where the execution condition is held to a state where the execution condition is not held, a delay time is set for the engine revolution speed and the fuel injection amount just before coming into the state where the execution condition is not held, to thereby delay the stop of spraying of the urea water by the set delay time. The delay time may be set depending on an estimated value of the catalyst amount remaining in the SCR catalyst 144.

A basic amount of generated NOx is obtained by reading a map containing data of the basic amount of generated NOx with respect to both the engine revolution speed and the fuel injection amount (303). This process may be performed by additionally using a transient modification value depending on a change of the intake air amount or the throttle opening with time. Further, a reaction coefficient (mole coefficient) in the SCR catalyst is computed depending on the SCR temperature. The mole coefficient may be obtained by previously setting its measured value as a value related to the engine exhaust temperature. In this case, for example, the engine revolution speed, the fuel injection amount, and the intake air amount may be used as parameters regarding the engine exhaust temperature.

The basic amount of generated NOx is multiplied by the transient modification value and the mole coefficient to determine an amount of NOx capable of causing a reaction (304). Simultaneously, the following treatment is carried out at intervals of a predetermined time regardless of whether the urea water is sprayed or not.

A maximum amount of urea allowable to remain in the catalyst 144 while being adsorbed therein is computed depending on the catalyst temperature, and the in-catalyst remaining urea amount, i.e., the amount of urea remaining in the catalyst 144, is multiplied by an evaporation coefficient (which is a value not larger than 1) depending on the catalyst temperature to obtain an amount of evaporated urea. At the same time, a reaction coefficient of urea with respect to NOx is determined to compute an amount of urea consumed in the treatment of NOx. By subtracting the amount of evaporated urea and the amount of consumed urea from the amount of urea remaining in the catalyst 144, a new in-catalyst remaining urea amount is computed (305). If the remaining-allowable maximum urea amount is equal to or smaller than the latest in-catalyst remaining urea amount computed in (305), the spraying of the urea water is stopped so that an ammonia slip can be prevented.

If the remaining-allowable maximum urea amount is larger than the latest in-catalyst remaining urea amount computed in (305), an amount of the urea water to be sprayed is computed by dividing the amount of reaction-causable NOx, which has been determined in (304), by a urea concentration in the urea water (306).

A new in-catalyst remaining urea amount is determined from the sum of the amount of the sprayed urea water and the previous amount of the urea water remaining in the catalyst 144, following which the latest in-catalyst remaining urea amount (307) is obtained by repeating the computation of (305).

While monitoring an output of an ammonia sensor or a NOx sensor disposed downstream of the SCR catalyst 144, if the sensor output is increased immediately after spraying the urea water, there is a possibility that an ammonia slip occurs. In that case, therefore, the remaining-allowable maximum urea amount is modified in a direction to increase (308). A modification value of the remaining-allowable maximum urea amount is stored in a backup RAM or EEPROM so that the stored data is held even after power-off of the control unit 200.

When the amount of the urea water in a urea water tank comes into a predetermined range, the control unit 200 informs a driver of the fact that the amount of the remaining urea water has reduced to a low level. As an alternative, the driver may be informed of the mileage through which the vehicle is allowed to travel while treating the exhaust gas with the amount of the remaining urea water. Further, the place of a nearby urea water station may be displayed on a car navigator. When the amount of the urea water remaining in the urea water tank is reduced below a lower limit, the spraying of the urea water is stopped and an alarm is issued for prompting the driver to reduce the engine output (309).

If, after stopping the engine, the engine is restarted while the amount of the urea water remaining in the urea water tank is left below the lower limit, a limit value of the allowable mileage or speed is set to a severer level. If the engine startup is repeated several times while the amount of the urea water remaining in the urea water tank is left below the lower limit, an action may be taken so as to allow traveling only at an idle speed or to allow the engine to operate for a predetermined time only. As a final action, the engine startup may be prohibited.

When a predetermined time has lapsed after the engine was stopped and the engine revolution speed became zero, a purging process for the urea water pipe is performed. Immediately after the stop of the engine, for example, the exhaust passage 140 (exhaust pipe) is still hot, and therefore the control unit 200 waits until the exhaust pipe is cooled. After the lapse of a predetermined time, a valve communicating with the urea water pipe and bypassing the fuel injection valve is opened, and simultaneously a purge air valve is opened to introduce air from an air tank, thereby purging the urea water remaining in the urea water pipe. Finally, the fuel injection valve is operated and the bypassing valve is closed, causing the urea water in the fuel injection valve to be purged into the exhaust pipe (310).

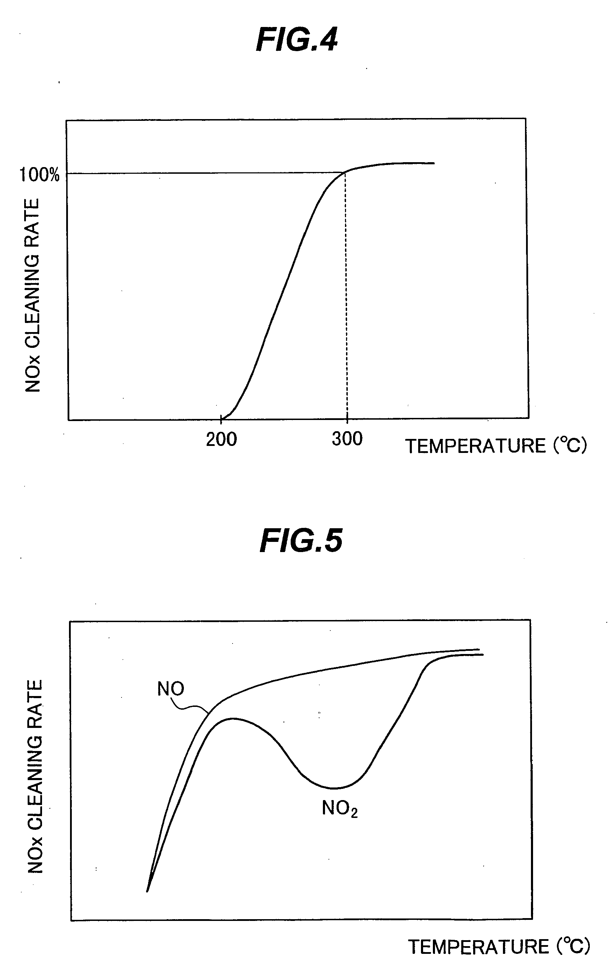

The reaction coefficient of the catalyst 144 depends on the exhaust gas temperature. As shown in Fig. 4, the catalyst 144 is able to clean NOx from a temperature of about 200°C. At temperatures not lower than about 300°C, NOx can be cleaned at a rate of nearly 100% by supplying the reductant in amount corresponding to the NOx amount. In other words, by mixing, to the exhaust gas, the reductant in amount that is determined by multiplying the NOx amount (Qnox) by the reaction coefficient, the exhaust gas can be completely cleaned and the reductant can be prevented from being exhausted in a not-yet-reacted state to the outside of the exhaust gas cleaning system.

Assuming the reductant to be urea, the urea reacts with NO and $NO_2$ as follows.

When the urea generates ammonia with hydrolysis, the following reactions occurs.

$$(NH_2)2CO + H_2O = 2NH_3 + CO_2$$

$$6NO + 4NH_3 = 5N_2 + 6H_2O$$

$$6NO_2 + 8NH_3 = 7N_2 + 12H_2O$$

Accordingly, when NO and $NO_2$ are mixed in NOx, the amount of required urea is changed depending on a ratio of NO to $NO_2$. In the case of NO alone, the urea is required to be mixed at a 1/3-mole ratio with respect to the NOx amount. In the case of $NO_2$ alone, however, the urea must be mixed at a ratio increased to a 2/3-mole ratio. For that reason, the mole ratio of the urea is controlled depending on the temperature by determining the ratio of NO to $NO_2$, i.e., components of NOx, corresponding to the exhaust gas temperature (see Fig. 5).

On the other hand, when urea is directly mixed to the exhaust gas, the following reactions occurs:

$$2NO + (NH_2) 2CO + 1/2 O_2 = 2N_2 + CO_2 + 2H_2O$$

$$2NO_2 + (NH_2) 2CO = 2N_2 + CO_2 + 2H_2O + 1/2 O_2$$

Thus, the urea is required to be mixed at a 1/2-mole ratio with respect to the NOx amount.

Further, the amount of supplied urea is set in reverse proportion to the concentration of the urea water. When the concentration of the urea water is zero, no reaction occurs in spite of the spraying of the urea water, and an alarm indicating an abnormality of the urea water is issued. As a failsafe action, the spraying of the urea water may be stopped.

The catalyst 144 has not only the action of adsorbing NOx, but also the action of occluding ammonia and urea. When the NOx amount is abruptly increased in a transient state, particularly during acceleration, the ammonia and the urea both trapped in the catalyst 144 with the occluding action are used to react with NOx. Because the occluded ammonia and urea are consumed up at once, the urea is simultaneously supplied in amount over the above-mentioned preset amount of urea to be supplied, thereby replenishing the amounts of ammonia and urea in the catalyst 144.

The action of adsorbing NOx and the action of occluding ammonia and urea depend on the catalyst temperature.

Because, in the catalyst 144, the catalyst temperature is substantially equal to the exhaust gas temperature, the reaction coefficient (C-NOx) and the occlusion coefficient (C-NH$_3$) are determined depending on the exhaust gas temperature and the urea water is sprayed in amount over the preset amount in the transient state.

Assuming, for example, that the exhaust system shifts from a steady state 1 (NOx amount = Qnox1) to a steady state 2 (NOx amount = Qnox2) through the transient state and the reaction coefficients in those steady states are (C-NOx)1 and (C-NOx)2, the urea water is excessively sprayed over the amount corresponding to;

$$[(C\text{-}NOx)2 - (C\text{-}NOx)1] \times [Qnox2 - Qnox1]$$

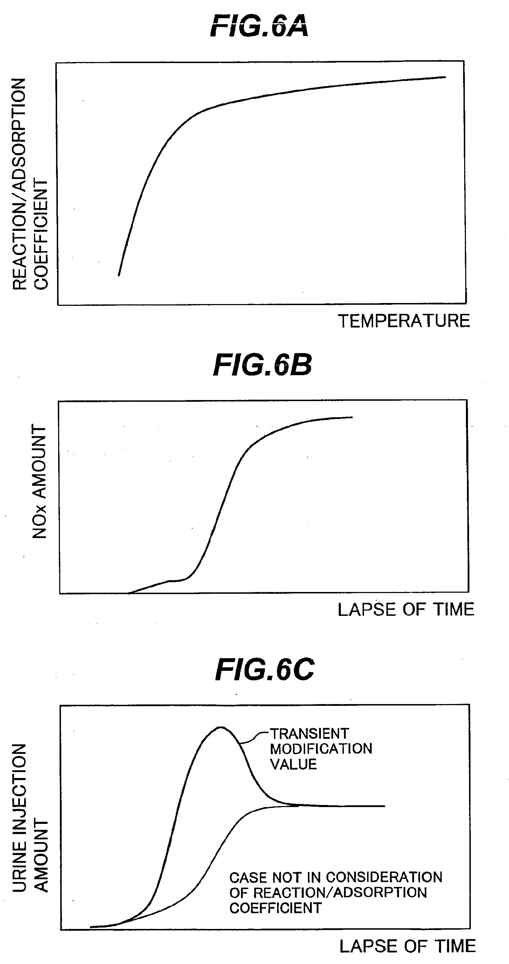

in the transient state, whereby urea is stored in the catalyst 144 to ensure the urea amount in the transient state (see Fig. 6).

The reaction coefficient is modified by using the exhaust sensor 148 disposed downstream of the catalyst 144, and the modification amount of the reaction coefficient is further modified with, e.g., PI control so that the output of the exhaust sensor 148 becomes zero. As a result of the modifications, if the result departs from a proper control range of the modification value, it is estimated that the catalyst 144 has deteriorated.

For example, the NOx sensor 148 is disposed as the exhaust sensor downstream of the catalyst 144 to measure whether the mixing ratio of NOx to the urea water in the exhaust gas is matched with a preset value. If the output of the NOx sensor is zero, this indicates that the mixing ratio is the preset value. On the other hand, if the output of the NOx sensor is other than zero, the amount of the sprayed urea water is modified depending on the NOx amount indicated by the output of the NOx sensor.

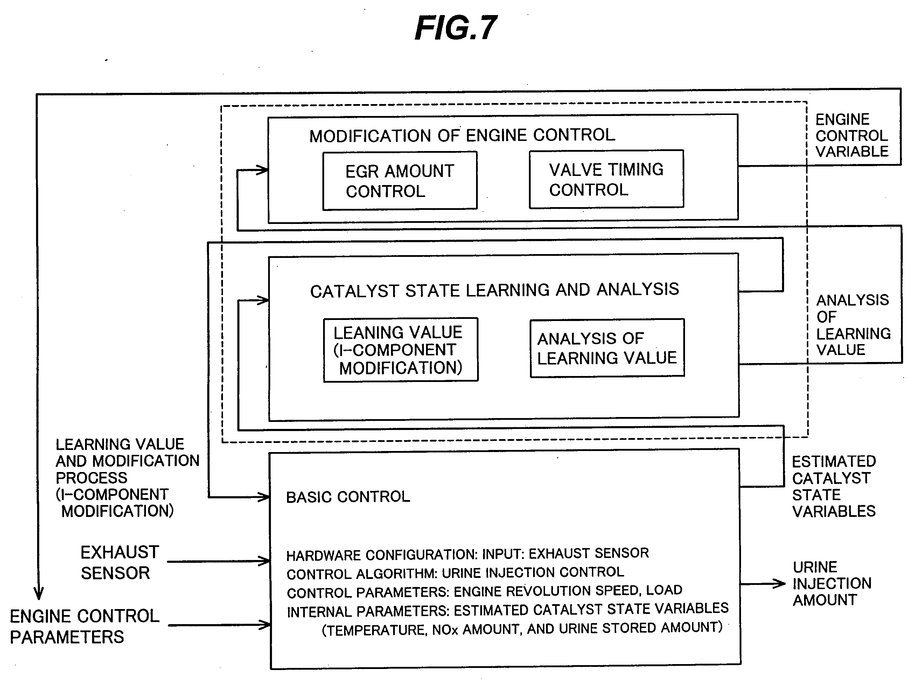

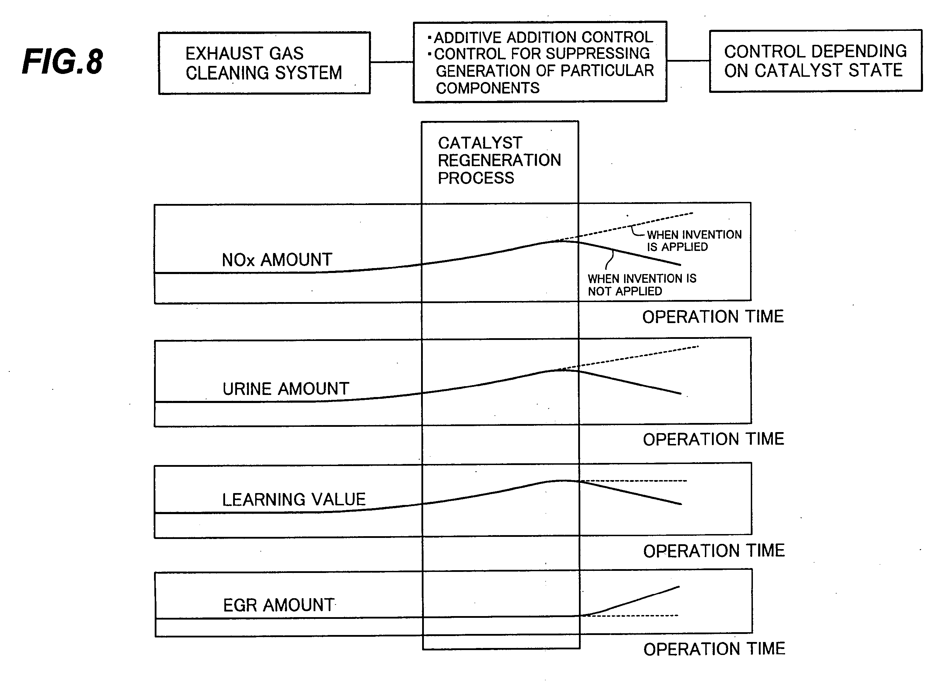

In this connection, when the NOx amount indicated by the output of the NOx sensor is further increased after increasing the amount of the sprayed urea water, the amount of the sprayed urea water is modified to decrease on contrary to the above case because of a possibility that ammonia not yet cleaned is detected by the NOx sensor 148. If the modification coefficient (learning value) is outside a predetermined range, this means that the amount of the sprayed urea water or the amount of NOx exhausted from the engine (i.e., the combustion chamber 105) differs from the initial value, thus resulting in a possibility of departing from the cleaning enable range of the catalyst 144. In such an event, the urea water is temporarily sprayed into the catalyst 144 in large amount to increase the amount of urea stored in the catalyst 144, or the operating condition of the engine is changed to control the catalyst temperature to a value different from that in the ordinary state, thereby regenerating the catalyst 144. Then, if the modification coefficient (learning value) of the urea water spray amount is returned to within the predetermined range, the regeneration process is brought to an end (see Fig. 7). As a result of the catalyst 144 being regenerated in such a manner, the emission amount of NOx is reduced after the regeneration as shown in Fig. 8. If the modification coefficient is not returned to within the predetermined range, namely if the regeneration of the catalyst 144 is insufficient, the EGR amount is increased to reduce NOx by the combustion itself (i.e., by the combustion occurred in the combustion chamber 105).

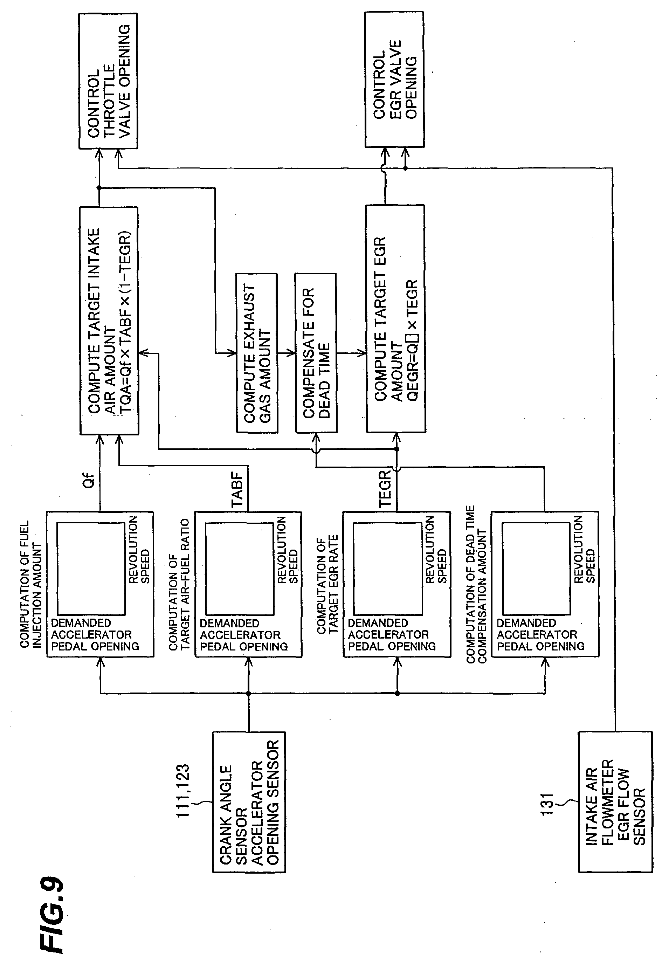

Control of the EGR amount will be described below with reference to Fig. 9. Because the engine output is substantially decided depending on the fuel injection amount, a fuel injection amount (Qf) is computed from the demanded accelerator pedal opening and revolution speed.

Further, a target air-fuel ratio (TABF) and a target EGR amount (TEGR) are computed depending on the operating state. In the steady state, the intake air amount passing through the throttle valve 104 is matched with the air amount passing through the supercharger 141. Therefore, the throttle valve opening is controlled so that a target air amount TQA determined as $TQA = Qf \times TABF \times (1 - TEGR)$ is obtained.

Simultaneously, a target EGR flow rate TQE is computed from an exhaust gas amount QE[n] and the target TEGR. As the exhaust gas amount, a value QE[] is used which has been compensated for a dead time delay. The compensation for the dead time delay is executed as follows. An exhaust-gas amount data sequence QE[] is stored by sampling the exhaust gas amount QE at the intervals of a predetermined time or a predetermined crank angle.

Based on engine characteristic values measured in advance, a sampling delay number (n) corresponding to a target delay time or delay angle is computed from both the engine revolution speed and the fuel injection amount. Then, the target EGR flow rate TQE is determined using the past sampling value in the n-th position of the past exhaust-gas amount data sequence QE[].

In the case using the EGR flow sensor 163, the EGR valve opening is controlled so that an output value QER of the EGR flow sensor 163 is matched with the target EGR flow rate TQE.

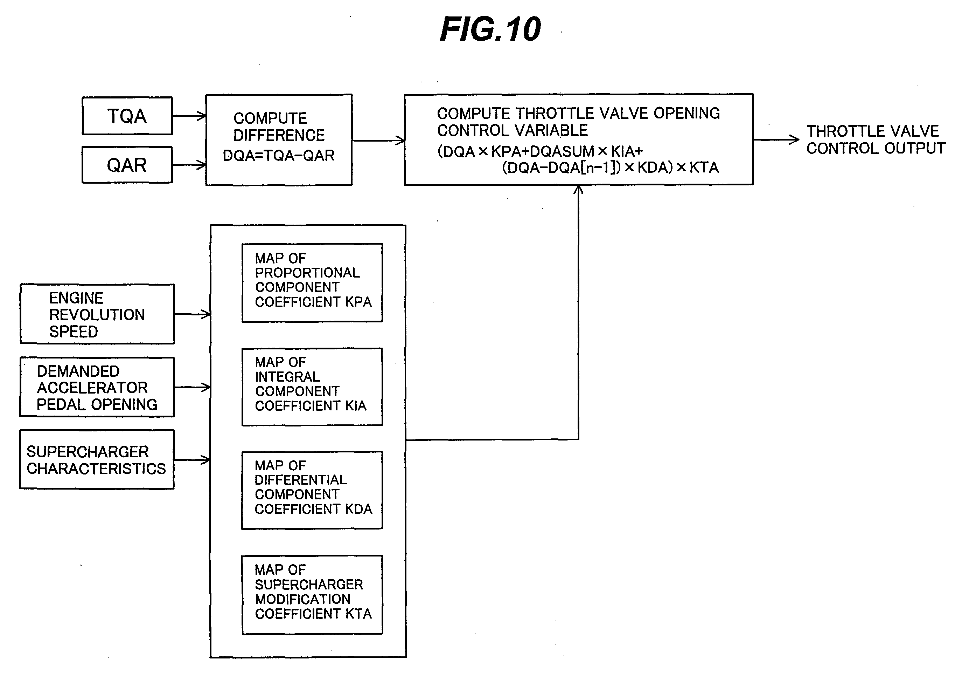

The throttle valve opening is controlled as follows. Fig. 10 is a block diagram for the throttle valve control.

At the intervals of a predetermined time, a difference DQA between the target air amount TQA and an actual air amount QAR is computed as given below:

$$DQA = TQA - QAR$$

Then, by using a map set in advance, a proportional component coefficient KPA, an integral component coefficient KIA, and a differential component coefficient KDA are determined from the engine revolution speed and the demanded accelerator pedal opening, followed by computing a throttle-valve opening control variable as follows;

$$\text{Throttle-valve opening control variable} = DQA \times KPA$$
$$+ DQASUM \times KIA + (DQA - DQA[n-1]) \times KDA$$

where DQASUM = DQA + DQASUM [n-1] and [n-1] represents a preceding value.

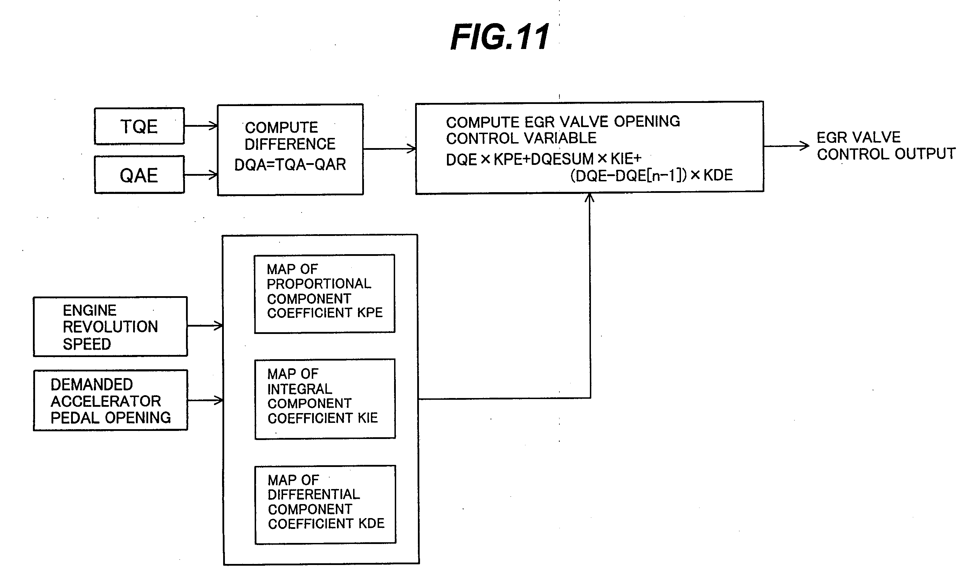

Similarly, an EGR-valve opening control variable is determined as follows. Fig. 11 is a block diagram for the EGR valve control.

At the intervals of a predetermined time, a difference DQE between the target EGR flow rate TQE and an actual EGR flow rate QER is computed as given below:

$$DQE = TQE - QAE$$

Then, by using a map set in advance, a proportional component coefficient KPE, an integral component coefficient KIE, and a differential component coefficient KDE are determined from the engine revolution speed and the demanded accelerator pedal opening, followed by computing an EGR-valve opening control variable as follows;

$$\text{EGR-valve opening control variable} = DQE \times KPE$$
$$+ DQESUM \times KIE + (DQE - DQE[n-1]) \times KDE$$

where DQESUM = DQE + DQESUM[n-1] and [n-1] represents a preceding value.

In the transient state, since a response characteristic of the supercharger is slow, the predetermined EGR amount cannot be obtained if the throttle valve opening is controlled using the intake air flowmeter, i.e., the actual air amount QAR. For that reason, QAR is multiplied by a modification coefficient in match with the response characteristic of the supercharger. The modification coefficient is set to a value in match with the engine characteristic as a function of the exhaust gas amount QE and the supercharge pressure in supercharger control.

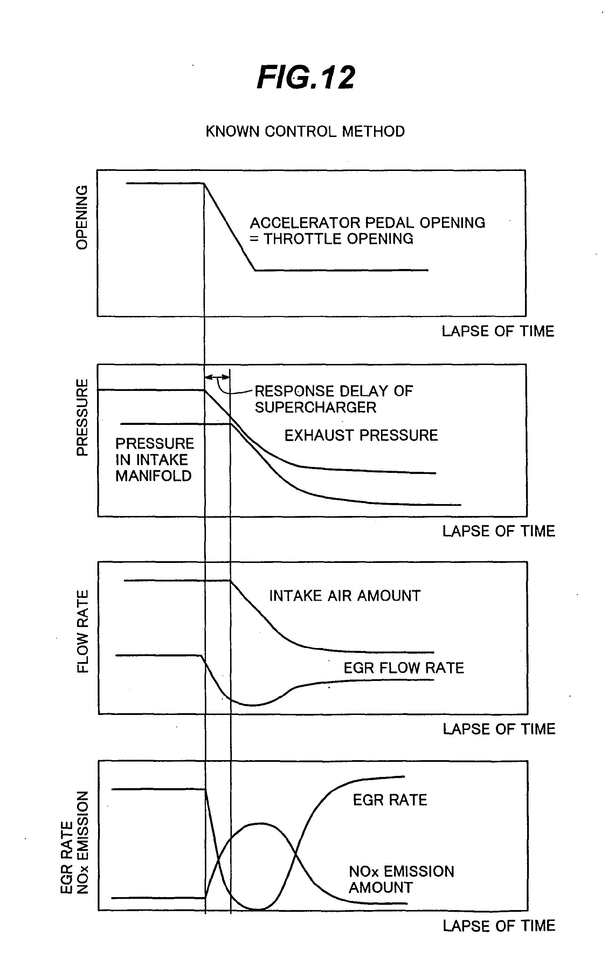

Fig. 12 shows, a comparative example, a time chart for the known control.

If the throttle valve opening is controlled to be matched with the demanded accelerator pedal opening, a reduction of the intake air amount is not proportional to a reduction of the throttle valve opening because of the response delay of the supercharger. The response delay is attributable to the inertia of the supercharger impeller. On the other hand, since the exhaust pressure is reduced in proportion to the demanded accelerator pedal opening, there occurs a difference between the exhaust pressure and the pressure in an intake manifold (downstream of the throttle valve 104 in the intake passage 130) in the transient state. Accordingly, the EGR amount is reduced and so is the EGR rate of the intake air taken into the engine, thus resulting in an increased emission amount of NOx.

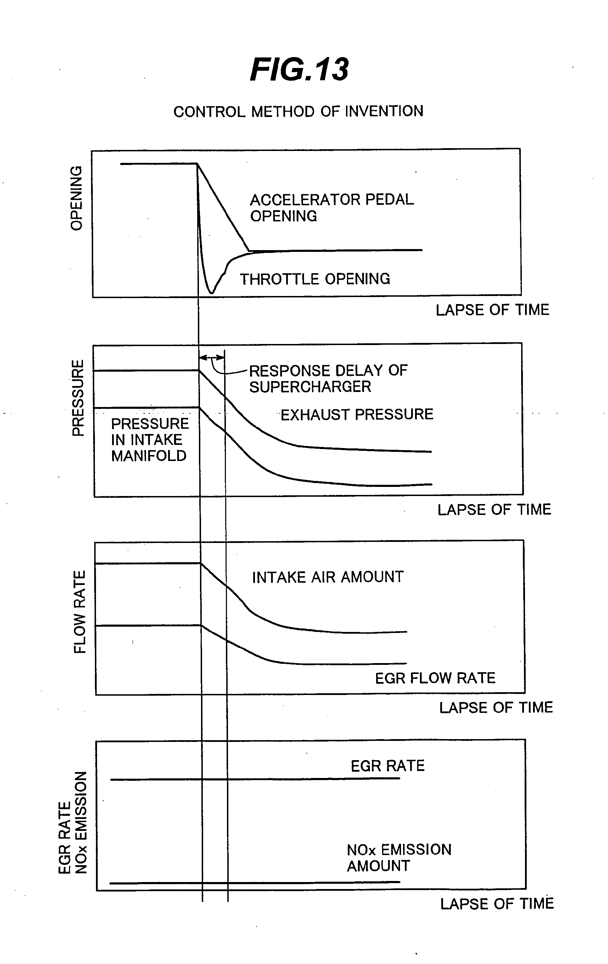

In contrast, according to this embodiment, the intake air amount can be controlled while the EGR rate is held constant, as shown in Fig. 13, by controlling harmoniously controlling the throttle valve opening and the EGR valve opening in match with the operating state of the engine. Stated another way, the reduction of the intake air amount is started at an earlier point in time than that in the known control by temporarily narrowing the throttle valve 104 in consideration of the response delay of the supercharger 141. It is therefore possible to ensure the proper EGR amount and to hold the EGR rate constant. As a result, the NOx emission amount can be suppressed.

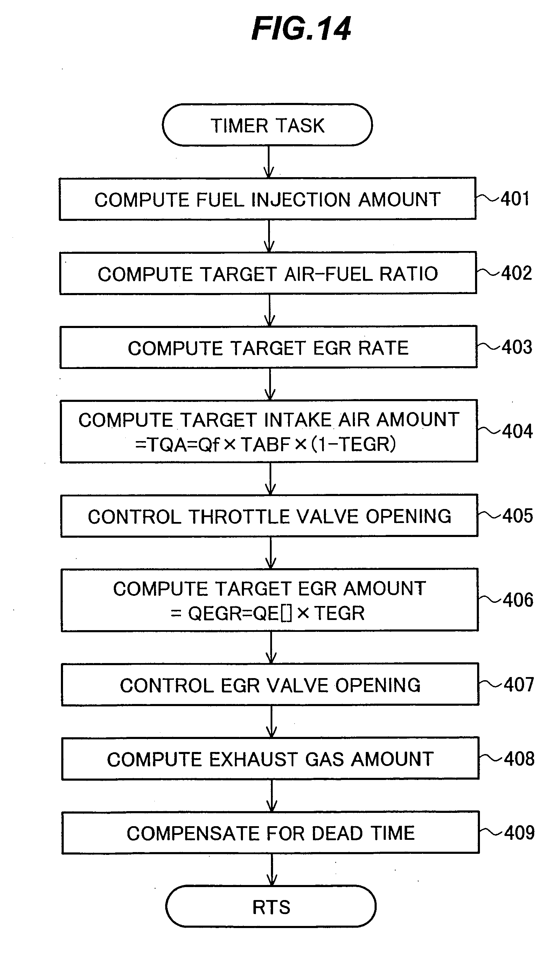

Fig. 14 is a flowchart showing an EGR valve control routine. In a predetermined timer task, the fuel injection amount is computed (step 401). Then, the target air-fuel ratio is computed (step 402). Subsequently, the target EGR rate is computed (step 403). Further, the target intake air amount is computed based on the target air-fuel ratio and the target EGR rate (step 404). The throttle-valve opening control variable is computed based on the target intake air amount and the actual intake air amount (step 405). Then, the target EGR amount is computed (step 406). The EGR-valve opening control variable is computed based on the target EGR flow rate and the actual EGR flow rate (step 407).

Finally, the exhaust gas amount is computed to make a shift of data for compensation of the dead time (delay) (steps 408 and 409). While the valve control using the EGR flow sensor and the intake air flowmeter has been described above, an estimated value of the pressure in the intake manifold (downstream of the throttle valve 104 in the intake passage 130) is used to further increase the control accuracy.

An estimated value PIN of the pressure in the intake manifold is determined by;

$$PIN = (QEGR + QAIR) \times (\text{gas temperature in intake manifold}) / (\text{volume of intake manifold})$$

where QEGR represents the EGR gas amount in terms of mass, and QAIR represents the intake air amount in terms of mass.

Assuming the pressure upstream of the throttle valve to be PCOMP and the area coefficient of the throttle valve to be KA, the following formula holds:

$$QAIR = KA \times \sqrt{((PCOMP - PIN) / \text{intake air temperature})}$$

Assuming the pressure upstream of the EGR valve to be PEX and the area coefficient of the EGR valve to be KE, the following formula holds:

$$QEGR = KE \times \sqrt{((PEX - PIN) / \text{exhaust gas temperature})}$$

Hence, the following relationships hold;

$$(PCOMP - PIN) \propto (QAIR^2)/(\text{intake air temperature} \times KA)$$

$$(PEX - PIN) \propto (QEGR^2)/(\text{exhaust air temperature} \times KE)$$

$$(PCOMP - PEX) \propto [(QAIR^2)/(\text{intake air temperature} \times KA)$$

$$- (QEGR^2)/(\text{exhaust air temperature} \times KE)]$$

If the exhaust gas temperature can be lowered to a value comparable to the intake air temperature by cooling the former with, e.g., the EGR cooler 161, the above last formula can be simplified to:

$$(PCOMP - PEX) \propto (QAIR^2/KA - QEGR^2/KE) \text{ / intake air}$$

$$\text{temperature}$$

Thus, if the pressure in the intake manifold, the pressure PCOMP upstream of the throttle valve, and the pressure PEX upstream of the EGR valve can be set by measurement or through estimation of matching values with maps, the intake air amount QAIR and the EGR gas amount QEGR can be determined. In practice, since mounting a plurality of pressure sensors is disadvantageous from the viewpoint of cost efficiency, only a sensor for detecting the pressure in the intake manifold may be disposed. In this case, PCOMP and PEX are measured in advance depending on the operating conditions of the engine, and measured data is stored in maps representing the relations of PCOMP and PEX with respect to the engine revolution speed and the demanded accelerator pedal opening.

Although the amounts of generated NOx and PM (such as soot) can be reduced by the EGR control, but they cannot be made zero. Therefore, NOx must be treated in the exhaust system.

For example, the exhaust gas is treated by using the DPF 142 and the NOx removing catalyst 144 which are able to trap PM (such as soot) contained in the exhaust gas. When the amount of PM (such as soot) trapped in the DPF 142 is increased and the pressure in the exhaust passage rises, the engine control unit is requested to execute control for increasing the exhaust gas temperature to a value higher than the ordinary temperature and burning out the PM (such as soot) trapped in the DPF 142.

Also, when the NOx amount in the NOx catalyst 144 capable of trapping NOx is increased, the engine control unit is requested to execute control for spraying, as the reductant, fuel or urea into the exhaust gas and reducing NOx so as to become harmless.

In order to make the air-fuel ratio temporarily stoichiometric or rich, the engine control unit commands the throttle valve 104, the EGR valve 165, etc. to perform a process of increasing the EGR amount and reducing the intake air amount. As an alternative, an EGR control unit may also be designed to receive the above-mentioned signals for the exhaust gas treating system and to control the throttle valve opening and the EGR valve opening.

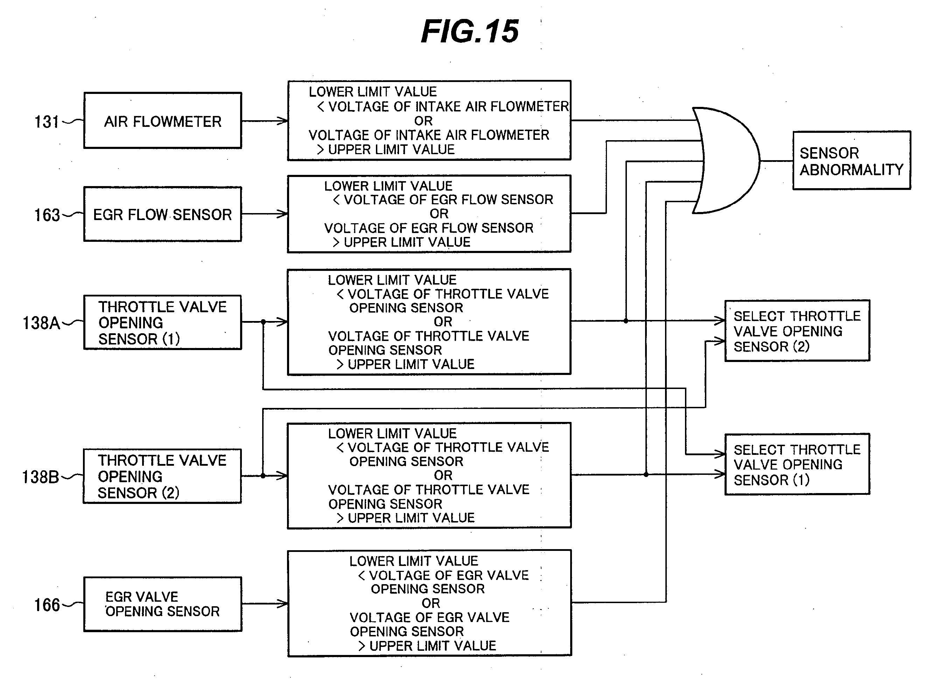

A method for diagnosis of the EGR control will be described below. Fig. 15 is a block diagram for explaining the diagnosis of the EGR control. First, it is determined whether the output voltage of the air flowmeter 131 is within a predetermined voltage range. Also, it is determined whether the output voltage of the EGR flow sensor 163 is within a predetermined voltage range. Further, it is determined whether the output voltages of respective opening sensors for the throttle valve 104 and the EGR valve 165 are each within a predetermined voltage range.

At the same time, a plurality of potentiometers (138A, 138B) are prepared for each of the opening sensors to be capable of coping with chattering. More specifically, when one of a plurality of potentiometer voltages is outside a normal range while the other potentiometer voltage is within the predetermined voltage range, the potentiometer voltage falling within the normal range is employed. Also, it is determined whether the output voltage of the EGR valve opening sensor is within the predetermined voltage range. As a result of the above-mentioned diagnosis of each sensor voltage, if the output voltage of any sensor is outside the predetermined voltage range, this is regarded as a sensor abnormality and an alarm lamp is turned on to inform the driver of the necessity of repair of the relevant sensor.

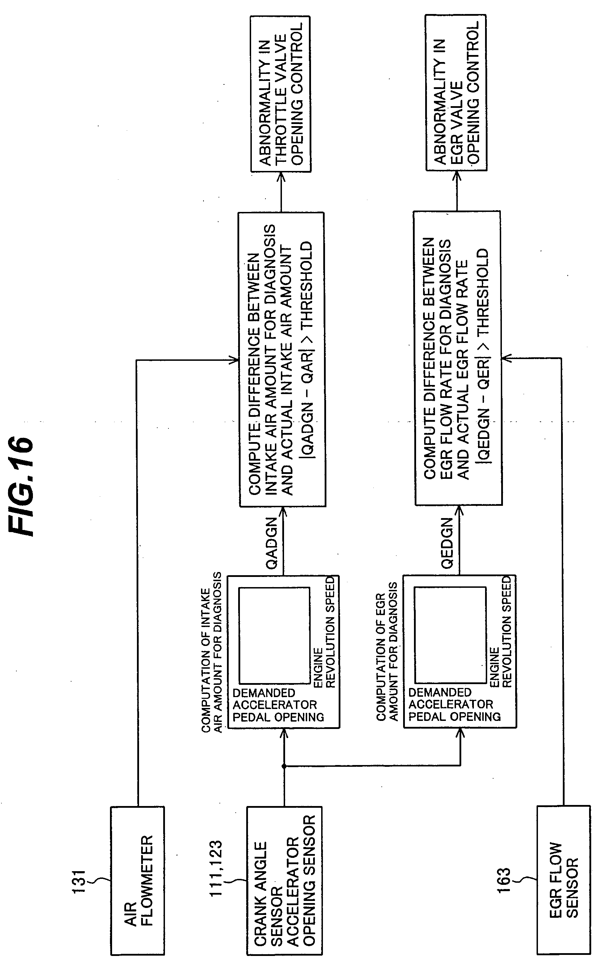

Fig. 16 is a block diagram for explaining the diagnosis of the valve opening control. There is a possibility of an abnormality in the throttle valve control when the target throttle valve opening continues to remain fully closed in the state other than idling or fully open in the idling state over a predetermined time for the reason that the actual output of the air flowmeter 131 cannot follow the demanded intake air amount, which is determined from the engine revolution speed and the fuel injection amount, and shows a large discrepancy with respect to the demanded intake air amount. Similarly, there is a possibility of an abnormality in the EGR valve control when the EGR valve 165 continues to remain in a fully closed state or a fully open state over a predetermined time for the reason that the actual EGR amount cannot follow the demanded EGR amount and shows a large discrepancy with respect to the demanded EGR amount. In one example of control for the EGR valve 165, to suppress pulsations of an EGR flow, the EGR valve opening is oscillated at a predetermined width depending on the engine revolution speed so as to cancel the pulsations of the EGR flow so that the EGR flow becomes uniform. As a result, mixing fluctuations caused within the intake manifold can be held down.

The emission amount of NOx can also be suppressed by changing the fuel injection timing instead of making the EGR control. Further, the cleaning rate of the catalyst 144 is diagnosed by using a means for estimating or measuring the NOx amount and a means for estimating or measuring the reaction coefficient of the catalyst 144 in a combined manner in the control unit.

First, in the means for estimating the NOx amount, an intake air amount (Qnew) per cylinder is computed from the intake air amount and the revolution speed of the engine. At the same time, a fuel amount (Fcyl) corresponding to the accelerator (pedal) opening sensor is computed. An air-fuel ratio ($\lambda i$) in an ideal combustion state is determined by computing a ratio of the intake air amount (Qnew) to the fuel amount (Fcyl).

An EGR rate (γ) is computed from both the EGR gas amount measured by the EGR flow sensor 163 or the estimated EGR gas amount and the revolution speed, and an oxygen amount (Qegr) in the EGR gas amount per cylinder is added to the intake air amount (Qnew), to thereby obtain an oxygen amount (Qcyl) flowing into one cylinder. The air-fuel ratio (λi) in the ideal combustion state is modified depending on the fuel injection timing to determine an actual air-fuel ratio (λr) in the combustion chamber 105. Simultaneously, the highest combustion temperature in the combustion chamber 105 is estimated depending on the total gas amount and the EGR rate.

In general, at the fuel injection timing being outside a predetermined range, mixing of fuel and air is not satisfactory and the combustion temperature lowers. Also, at a higher EGR rate, an essential expansion ratio is reduced, thus resulting in a lower combustion temperature. With a lowering of the combustion temperature, the amount of generated NOx is suppressed.

Accordingly, a NOx amount (NOxcyl) per combustion cycle can be estimated from the oxygen amount (Qcyl) flowing into the combustion chamber 105, the EGR rate (γ), and the actual air-fuel ratio (λr) at the combustion gas temperature computed therefrom.

A NOx amount (Qnox) for each predetermined time can be determined by multiplying the NOx amount (NOxcyl) per cylinder by the revolution speed.

Assuming the oxygen amount remaining in the exhaust gas to be (Qex), for example, the following formulae hold:

$$\text{Qcyl = Qnew + Qegr}$$

$$\text{Qex = Qcyl} \times (\lambda r - 1)\lambda r$$

$$\text{Qegr = Qex} \times \gamma$$

In the steady state, therefore, the oxygen amount in the exhaust gas is given by:

$$\text{Qex = Qnew} \times (\lambda r - 1) / (\lambda r - \gamma \times (\lambda r - 1))$$

Thus, when the air-fuel ratio (λr) is fairly large as in lean burn, the EGR rate can also computed from the relationship between the EGR rate and the intake air amount (Qnew), given below, by measuring the oxygen amount (Qex) remaining in the exhaust gas:

$$\gamma \approx 1 - \text{Qnew/Qex}$$

By defining the combustion gas temperature as a function of λr, the combustion gas temperature can be estimated from:

$$\text{Qnox = NOxcyl} \times \text{revolution speed}$$
$$= \text{temperature function } (\lambda r) \times \text{Qcyl} \times (1 - \gamma)$$
$$\times \text{revolution speed}$$

The estimated NOx amount is compared with the NOx amount computed from the output of the exhaust sensor 148. If there is a difference between them in excess of a predetermined ratio or a predetermined value, this leads to a diagnosis result that the exhaust sensor 148 has an abnormality. Then, diagnosis regarding an abnormality of other particular components is performed.

When the air-fuel ratio in the exhaust passage 140 is not larger than a predetermined value, there is a possibility that a large amount of PM (such as soot) is generated due to the combustion occurred in the combustion chamber 105. Usually, PM is trapped by the DPF 142. In the case of PM being generated in large amount, however, the DPF 142 is clogged in a shorter period and the exhaust efficiency deteriorates. Also, if the temperature of the DPF 142 rises beyond the ignition temperature of PM, this causes a risk that the PM may be burnt in the DPF 142 and the DPF 142 may deteriorate. The burning of the PM in the DPF 142 raises the temperature of the SCR catalyst 144 and accelerates deterioration of the SCR catalyst 144. In addition, the performance of the SCR catalyst 144 is further reduced with deposition of the PM on the SCR catalyst 144.

For that reason, it is also required to monitor the air-fuel ratio in the exhaust gas. Then, if the monitored ratio is not larger than a predetermined value, the air-fuel ratio is set to the lean side by lowering the engine output or reducing the EGR rate. A threshold used for the diagnosis in such a process is set to a certain value or a value depending on the EGR rate.

Diagnosis of HC and CO can also be performed in accordance with the output of the air-fuel ratio sensor and the NOx amount. For example, when the air-fuel ratio is close to a stoichiometric ratio and the EGR rate is not larger than a predetermined value, this condition is diagnosed as indicating that HC and CO are present in amounts of not smaller than respective thresholds. When the air-fuel ratio is in a range between the stoichiometric ratio and the lean side, this condition is diagnosed as indicating that HC or CO is exhausted due to abnormal combustion, by using a threshold depending on the air-fuel ratio and the EGR rate. The threshold may be set to a value different for each of HC and CO.

Further, the flow rate of the urea water is measured at all times. Then, if a state where the flow rate is zero is continued in spite of the urea water being sprayed, this condition indicates that the urea water is not supplied, thus resulting in diagnosis that the exhaust gas cleaning system is abnormal.

In addition, the pressure in the urea water pipe is measured. Then, if a predetermined pressure is not reached in spite of a urea water pump being operated, this condition is also diagnosed as indicating that the exhaust gas cleaning system is abnormal. As a failsafe action, information is sent to the engine control unit depending on the state of deterioration. For example, when the concentration of the urea water is not higher than a predetermined value, or when the modification amount is outside a predetermined range while the amount of the sprayed urea water is modified depending on the output of the NOx sensor, this condition is informed as an abnormality of the exhaust gas cleaning system. Also, in the event of an electric trouble, such as when the output voltage of the NOx sensor is outside a predetermined range, or when the output voltage of the urea water concentration sensor is outside a predetermined range, this condition is informed as a sensor abnormality. As other failsafe actions, the following operations are carried out as required;

(1) turn on an alarm lamp,
(2) stop the spraying of the urea water,
(3) limit the mileage and/or the engine output and finally disable the startup of the engine when the engine startup is repeated in the state of the urea water being insufficient, and
(4) inform an abnormality to the outside of the vehicle via radio communication means.

The above described exemplary embodiments can be combined in any way as a whole or in part in order to build up further embodiments optimized for the respective application. As far as such modifications of the above described embodiments are readily apparent for the skilled person they shall be disclosed implicitly by the above described embodiments.

## Claims

1. A method for cleaning exhaust gas of an engine (100) including a catalyst (144) for removing a particular component, represented by NOx, contained in the exhaust gas of said engine (100), additive adding means for adding, to the exhaust gas, an additive for reducing the particular component represented by NOx, and EGR amount adjusting means for adjusting an EGR amount,
wherein the method includes a step of setting an addition amount of said additive and the EGR amount depending on an operating state.

2. The engine exhaust gas cleaning method according to Claim 1, wherein the method includes a step of setting the addition amount of said additive and the EGR amount depending on the operating state and deterioration of said catalyst (144) with time.

3. The engine exhaust gas cleaning method according to Claim 1 or 2, wherein the method includes a step of regenerating said catalyst (144) when a cleaning capability of said catalyst (144) has reduced to a predetermined value or below.

4. The engine exhaust gas cleaning method according to one of Claims 1 to 3, wherein the method includes a step of increasing the EGR amount when the regeneration of said catalyst (144) is determined as being insufficient.

5. The engine exhaust gas cleaning method according to one of Claims 1 to 4, wherein the method includes steps of detecting an amount of the particular component in the exhaust gas downstream of said catalyst (144) disposed in an exhaust passage (140), and modifying the addition amount of said additive depending on the amount of the detected particular component.

6. The engine exhaust gas cleaning method according to one of Claims 1 to 5, wherein the method includes a step of storing a result of computing a modification amount for the addition amount of said additive in a different storage unit or a different storage area depending on an operating state.

7. The engine exhaust gas cleaning method according to one of Claims 1 to 6, wherein the method includes steps of setting upper and lower limit values of the modification amount for the addition amount of said additive, and modifying engine control parameters in a direction to suppress emission of the particular component upon detection of arrival of the modification amount to the upper and lower limit values.

8. The engine exhaust gas cleaning method according to one of Claims 1 to 7, wherein the method includes steps of setting upper and lower limit values of the modification amount for the addition amount of said additive, and modifying the EGR rate or fuel injection timing in a direction to suppress emission of the particular component upon detection of arrival of the modification amount to the upper and lower limit values.

9. The engine exhaust gas cleaning method according to one of Claims 1 to 8, wherein the method includes a step of regenerating the cleaning capability of said catalyst (144) upon detection of arrival of the modification amount to the upper and lower limit values.

10. The engine exhaust gas cleaning method according to one of Claims 1 to 9, wherein the method includes a step of regenerating the cleaning capability of said catalyst (144) by temporarily changing an amount of urea added as said additive from an amount ordinarily added.

11. The engine exhaust gas cleaning method according to one of Claims 1 to 10, wherein at least one of urea water, ammonia water, hydrogen gas, and fuel is used as said additive.

12. The engine exhaust gas cleaning method according to one of Claims 1 to 11, wherein the method includes a step of modifying the addition amount of said additive depending on an amount of change in the operating state with time.

13. The engine exhaust gas cleaning method according to one of Claims 1 to 12, wherein at least one of amounts of changes in an accelerator pedal depression amount, a throttle opening, the EGR amount, an intake air amount, and a fuel injection amount, and an output of an exhaust sensor (148) is used as the amount of change in the operating state with time.

14. The engine exhaust gas cleaning method according to one of Claims 1 to 13, wherein the method includes steps of determining a relationship between an addition amount of said additive and an amount of the particular component in the exhaust gas downstream of said catalyst (144) disposed in an exhaust passage (140), computing a cleaning rate of the particular component based on the determined relationship, and issuing an alarm indicating the occurrence of an abnormality in an exhaust gas cleaning system when the computed cleaning rate is outside a predetermined range.

15. The engine exhaust gas cleaning method according to one of Claims 1 to 14, wherein the method includes steps of computing an emission amount of the particular component based on an output of an exhaust sensor (148) disposed downstream of said catalyst (144) in an exhaust passage (140), comparing the computed emission amount of the particular component with an estimated emission amount of the particular component obtained based on a relationship between an EGR amount or an EGR rate and an intake air amount, and modifying engine control parameters in a direction to suppress emission of the particular component when the emission amount of the particular component computed based on the exhaust sensor output is larger than the estimated emission amount.

16. The engine exhaust gas cleaning method according to one of Claims 1 to 15, wherein the method includes steps of computing emission amounts of a plurality of components based on the exhaust sensor output, estimating emission amounts of the plurality of components based on the relationship between an EGR amount or an EGR rate and an intake air amount, comparing the estimated emission amounts with the computed emission amounts, and detecting an abnormality of an exhaust gas cleaning system for each of the different components.

**17.** The engine exhaust gas cleaning method according to one of Claims 1 to 16, wherein the plurality of components are HC, CO and NOx components.

**18.** An engine exhaust gas cleaning system comprising a catalyst (144) for removing a particular component, represented by NOx, contained in exhaust gas of an engine (100), additive adding means for adding, to the exhaust gas, an additive for reducing the particular component represented by NOx, and EGR amount adjusting means for adjusting an EGR amount,
wherein the system further comprises control means for controlling an addition amount of said additive and the EGR amount depending on an operating state and deterioration of said catalyst with time, and
catalyst regenerating means for regenerating said catalyst when a cleaning capability of said catalyst has reduced to a predetermined value or below.

**19.** The engine exhaust gas cleaning system according to Claim 18, wherein said control means increases the EGR amount when the regeneration of said catalyst (144) is determined as being insufficient.

## FIG.1

EP 1 653 058 A1

CONTROL UNIT

FUEL TANK

200

123
166 160 161
165
131 136 138 139 108 101 118 119 141(141a) 145 150 148
163 109 146
104
141b 140 142 144
133 130 100 105 110
117
112 111 125

## FIG.2

CONTROL UNIT — 200

- IGNITION SWITCH (129) → DIGITAL INPUT CIRCUIT (205)
- CRANK ANGLE SENSOR (111), CAM ANGLE SENSOR (112) → PULSE INPUT CIRCUIT (206)
- AIR FLOWMETER (131), WATER TEMPERATURE SENSOR (110), EGR FLOW SENSOR (163) → ANALOG INPUT CIRCUIT (207)

CPU (201), ROM / RAM (202, 203)

- DIGITAL OUTPUT CIRCUIT (208) → RELAY UNIT (212)
- TIMER SETTING/OUTPUT CIRCUIT (209) → THROTTLE VALVE (104), EGR VALVE (165)
- COMMUNICATION CIRCUIT (210)

EP 1 653 058 A1

# FIG.3

Block diagram showing:

**(303)** BASIC INJECTION AMOUNT (NOx AMOUNT) → **TRANSIENT MODIFICATION COEFFICIENT** ← **(301)** TRANSIENT MODIFICATION REVOLUTION SPEED ACCELERATOR PEDAL OPENING INTAKE AIR AMOUNT FUEL INJECTION AMOUNT (TORQUE) COOLING WATER TEMPERATURE EXHAUST TEMPERATURE AIR-FUEL RATIO IN EXHAUST GAS

**(309)** ALARM CONCENTRATION AND REMAINING AMOUNT OF URINE WATER

MOLE COEFFICIENT — **(304)** — **(310)** PURGE CONTROL

MULTIPLI

PRESET MAXIMUM AMOUNT OF URINE ALLOWABLE TO REMAIN IN CATALYST — **(305)**

**(302)** HEATER CONTROL

EVAPORATION AND REACTION COEFFICIENTS

MODIFY URINE WATER CONCENTRATION — **(306)** — **(307)** → INJECTION AMOUNT → SCR CATALYST

144

**(308)** MODIFY PRESET REMAINING -ALLOWABLE MAXIMUM URINE AMOUNT

MODIFY AMOUNT OF URINE REMAINING IN CATALYST (PI CONTROL)

AMOUNT OF URINE REMAINING IN CATALYST (INTEGRAL VALUE)

EXHAUST SENSOR

EP 1 653 058 A1

## FIG.4

## FIG.5

## FIG.6A

REACTION/ADSORPTION COEFFICIENT

TEMPERATURE

## FIG.6B

NOx AMOUNT

LAPSE OF TIME

## FIG.6C

URINE INJECTION AMOUNT

TRANSIENT MODIFICATION VALUE

CASE NOT IN CONSIDERATION OF REACTION/ADSORPTION COEFFICIENT

LAPSE OF TIME

# FIG.7

ENGINE CONTROL VARIABLE

MODIFICATION OF ENGINE CONTROL

| EGR AMOUNT CONTROL | VALVE TIMING CONTROL |

ANALYSIS OF LEARNING VALUE

CATALYST STATE LEARNING AND ANALYSIS

| LEANING VALUE (I-COMPONENT MODIFICATION) | ANALYSIS OF LEARNING VALUE |

LEARNING VALUE AND MODIFICATION PROCESS (I-COMPONENT MODIFICATION)

ESTIMATED CATALYST STATE VARIABLES

EXHAUST SENSOR

ENGINE CONTROL PARAMETERS

BASIC CONTROL

HARDWARE CONFIGURATION: INPUT: EXHAUST SENSOR
CONTROL ALGORITHM: URINE INJECTION CONTROL
CONTROL PARAMETERS: ENGINE REVOLUTION SPEED, LOAD
INTERNAL PARAMETERS: ESTIMATED CATALYST STATE VARIABLES
      (TEMPERATURE, NOx AMOUNT, AND URINE STORED AMOUNT)

URINE INJECTION AMOUNT

EP 1 653 058 A1

**FIG.8**

| EXHAUST GAS CLEANING SYSTEM | → | ·ADDITIVE ADDITION CONTROL<br>·CONTROL FOR SUPPRESSING<br>GENERATION OF PARTICULAR<br>COMPONENTS | → | CONTROL DEPENDING ON CATALYST STATE |

CATALYST REGENERATION PROCESS

NOx AMOUNT

WHEN INVENTION IS APPLIED

WHEN INVENTION IS NOT APPLIED

OPERATION TIME

URINE AMOUNT

OPERATION TIME

LEARNING VALUE

OPERATION TIME

EGR AMOUNT

OPERATION TIME

EP 1 653 058 A1

# FIG.9

EP 1 653 058 A1

COMPUTATION OF FUEL
INJECTION AMOUNT

DEMANDED ACCELERATOR PEDAL OPENING

REVOLUTION SPEED

COMPUTATION OF
TARGET AIR-FUEL RATIO

DEMANDED ACCELERATOR PEDAL OPENING

REVOLUTION SPEED

COMPUTATION OF
TARGET EGR RATE

DEMANDED ACCELERATOR PEDAL OPENING

REVOLUTION SPEED

COMPUTATION OF DEAD TIME
COMPENSATION AMOUNT

DEMANDED ACCELERATOR PEDAL OPENING

REVOLUTION SPEED

111,123

CRANK ANGLE
SENSOR
ACCELERATOR
OPENING SENSOR

131

INTAKE AIR
FLOWMETER
EGR FLOW
SENSOR

Qf

TABF

TEGR

COMPUTE TARGET INTAKE
AIR AMOUNT
$TQA = Qf \times TABF \times (1-TEGR)$

COMPUTE EXHAUST
GAS AMOUNT

COMPENSATE FOR
DEAD TIME

COMPUTE TARGET EGR
AMOUNT
$QEGR = Q\square \times TEGR$

CONTROL
THROTTLE
VALVE OPENING

CONTROL
EGR VALVE
OPENING

# FIG.10

```
┌─────────┐      ┌──────────────┐        ┌────────────────────────────────┐
│   TQA   │─────▶│   COMPUTE    │        │ COMPUTE THROTTLE VALVE OPENING │
└─────────┘      │  DIFFERENCE  │───────▶│ CONTROL VARIABLE               │            THROTTLE VALVE
                 │ DQA=TQA-QAR  │        │ (DQA × KPA+DQASUM × KIA+        │─────────▶  CONTROL OUTPUT
┌─────────┐      │              │        │     (DQA-DQA[n-1]) × KDA) × KTA │
│   QAR   │─────▶│              │        └────────────────────────────────┘
└─────────┘      └──────────────┘
```

Throttle valve opening control variable computed as:

$$(DQA \times KPA + DQASUM \times KIA + (DQA - DQA[n-1]) \times KDA) \times KTA$$

Difference computed as:

$$DQA = TQA - QAR$$

```
┌──────────────┐      ┌─────────────────────────────────┐
│   ENGINE     │      │  ┌───────────────────────────┐  │
│ REVOLUTION   │─────▶│  │ MAP OF                    │  │
│   SPEED      │      │  │ PROPORTIONAL              │  │
└──────────────┘      │  │ COMPONENT                 │  │
                      │  │ COEFFICIENT KPA           │  │
┌──────────────┐      │  └───────────────────────────┘  │
│  DEMANDED    │      │                                 │
│ ACCELERATOR  │─────▶│  ┌───────────────────────────┐  │
│PEDAL OPENING │      │  │ MAP OF                    │  │
└──────────────┘      │  │ INTEGRAL                  │  │
                      │  │ COMPONENT                 │  │
┌──────────────┐      │  │ COEFFICIENT KIA           │  │
│ SUPERCHARGER │      │  └───────────────────────────┘  │
│CHARACTERISTICS│────▶│                                 │
└──────────────┘      │  ┌───────────────────────────┐  │
                      │  │ MAP OF                    │  │
                      │  │ DIFFERENTIAL              │  │
                      │  │ COMPONENT                 │  │
                      │  │ COEFFICIENT KDA           │  │
                      │  └───────────────────────────┘  │
                      │                                 │
                      │  ┌───────────────────────────┐  │
                      │  │ MAP OF                    │  │
                      │  │ SUPERCHARGER              │  │
                      │  │ MODIFICATION              │  │
                      │  │ COEFFICIENT KTA           │  │
                      │  └───────────────────────────┘  │
                      └─────────────────────────────────┘
```

EP 1 653 058 A1

# FIG.11

```
┌─────────┐
│   TQE   │──────┐
└─────────┘      │      ┌──────────────────┐
                 ├─────▶│ COMPUTE          │
┌─────────┐      │      │ DIFFERENCE       │──────┐
│   QAE   │──────┘      │ DQA=TQA-QAR      │      │
└─────────┘             └──────────────────┘      │
                                                  ▼
```

┌───────────────────────────────────────────────┐
│ COMPUTE EGR VALVE OPENING                       │
│ CONTROL VARIABLE                                │         EGR VALVE
│ DQE × KPE+DQESUM × KIE+                         │───────▶ CONTROL OUTPUT
│                     (DQE-DQE[n-1]) × KDE         │
└───────────────────────────────────────────────┘
                                          ▲
┌──────────────────┐                      │
│ ENGINE           │    ┌────────────────────────────────┐
│ REVOLUTION       │───▶│  ┌──────────────────────────┐   │
│ SPEED            │    │  │ MAP OF                   │   │
└──────────────────┘    │  │ PROPORTIONAL             │   │
                        │  │ COMPONENT                │   │
┌──────────────────┐    │  │ COEFFICIENT KPE          │   │
│ DEMANDED         │    │  └──────────────────────────┘   │
│ ACCELERATOR      │───▶│  ┌──────────────────────────┐   │
│ PEDAL OPENING    │    │  │ MAP OF                   │   │
└──────────────────┘    │  │ INTEGRAL                 │───┘
                        │  │ COMPONENT                │
                        │  │ COEFFICIENT KIE          │
                        │  └──────────────────────────┘
                        │  ┌──────────────────────────┐
                        │  │ MAP OF                   │
                        │  │ DIFFERENTIAL             │
                        │  │ COMPONENT                │
                        │  │ COEFFICIENT KDE          │
                        │  └──────────────────────────┘
                        └────────────────────────────────┘

EP 1 653 058 A1

# FIG.12

KNOWN CONTROL METHOD

# FIG.13

CONTROL METHOD OF INVENTION

OPENING

ACCELERATOR PEDAL OPENING

THROTTLE OPENING

LAPSE OF TIME

PRESSURE

RESPONSE DELAY OF SUPERCHARGER

EXHAUST PRESSURE

PRESSURE IN INTAKE MANIFOLD

LAPSE OF TIME

FLOW RATE

INTAKE AIR AMOUNT

EGR FLOW RATE

LAPSE OF TIME

EGR RATE NOx EMISSION

EGR RATE

NOx EMISSION AMOUNT

LAPSE OF TIME

## FIG.14

```
              ┌─────────────────────┐
              │     TIMER TASK      │
              └─────────────────────┘
                        │
                        ▼
    ┌──────────────────────────────────────────┐
    │   COMPUTE FUEL INJECTION AMOUNT          │~401
    └──────────────────────────────────────────┘
                        │
                        ▼
    ┌──────────────────────────────────────────┐
    │   COMPUTE TARGET AIR-FUEL RATIO          │~402
    └──────────────────────────────────────────┘
                        │
                        ▼
    ┌──────────────────────────────────────────┐
    │   COMPUTE TARGET EGR RATE                │~403
    └──────────────────────────────────────────┘
                        │
                        ▼
    ┌──────────────────────────────────────────┐
    │  COMPUTE TARGET INTAKE AIR AMOUNT        │~404
    │  =TQA=Qf × TABF ×(1-TEGR)                │
    └──────────────────────────────────────────┘
                        │
                        ▼
    ┌──────────────────────────────────────────┐
    │   CONTROL THROTTLE VALVE OPENING         │~405
    └──────────────────────────────────────────┘
                        │
                        ▼
    ┌──────────────────────────────────────────┐
    │   COMPUTE TARGET EGR AMOUNT              │~406
    │   = QEGR=QE[] × TEGR                     │
    └──────────────────────────────────────────┘
                        │
                        ▼
    ┌──────────────────────────────────────────┐
    │   CONTROL EGR VALVE OPENING              │~407
    └──────────────────────────────────────────┘
                        │
                        ▼
    ┌──────────────────────────────────────────┐
    │   COMPUTE EXHAUST GAS AMOUNT             │~408
    └──────────────────────────────────────────┘
                        │
                        ▼
    ┌──────────────────────────────────────────┐
    │   COMPENSATE FOR DEAD TIME              │~409
    └──────────────────────────────────────────┘
                        │
                        ▼
              ┌─────────────────────┐
              │        RTS          │
              └─────────────────────┘
```

27

## FIG.15

AIR FLOWMETER (131) → LOWER LIMIT VALUE < VOLTAGE OF INTAKE AIR FLOWMETER OR VOLTAGE OF INTAKE AIR FLOWMETER > UPPER LIMIT VALUE

EGR FLOW SENSOR (163) → LOWER LIMIT VALUE < VOLTAGE OF EGR FLOW SENSOR OR VOLTAGE OF EGR FLOW SENSOR > UPPER LIMIT VALUE

THROTTLE VALVE OPENING SENSOR (1) (138A) → LOWER LIMIT VALUE < VOLTAGE OF THROTTLE VALVE OPENING SENSOR OR VOLTAGE OF THROTTLE VALVE OPENING SENSOR > UPPER LIMIT VALUE

THROTTLE VALVE OPENING SENSOR (2) (138B) → LOWER LIMIT VALUE < VOLTAGE OF THROTTLE VALVE OPENING SENSOR OR VOLTAGE OF THROTTLE VALVE OPENING SENSOR > UPPER LIMIT VALUE

EGR VALVE OPENING SENSOR (166) → LOWER LIMIT VALUE < VOLTAGE OF EGR VALVE OPENING SENSOR OR VOLTAGE OF EGR VALVE OPENING SENSOR > UPPER LIMIT VALUE

→ SENSOR ABNORMALITY

→ SELECT THROTTLE VALVE OPENING SENSOR (2)

→ SELECT THROTTLE VALVE OPENING SENSOR (1)

EP 1 653 058 A1

# FIG.16

**131**

AIR FLOWMETER

**111,123**

CRANK ANGLE SENSOR ACCELERATOR OPENING SENSOR

COMPUTATION OF INTAKE AIR AMOUNT FOR DIAGNOSIS

DEMANDED ACCELERATOR PEDAL OPENING

ENGINE REVOLUTION SPEED

QADGN →

COMPUTE DIFFERENCE BETWEEN INTAKE AIR AMOUNT FOR DIAGNOSIS AND ACTUAL INTAKE AIR AMOUNT
|QADGN − QAR| > THRESHOLD

ABNORMALITY IN THROTTLE VALVE OPENING CONTROL

COMPUTATION OF EGR AMOUNT FOR DIAGNOSIS

DEMANDED ACCELERATOR PEDAL OPENING

ENGINE REVOLUTION SPEED

QEDGN →

COMPUTE DIFFERENCE BETWEEN EGR FLOW RATE FOR DIAGNOSIS AND ACTUAL EGR FLOW RATE
|QEDGN − QER| > THRESHOLD

ABNORMALITY IN EGR VALVE OPENING CONTROL

**163**

EGR FLOW SENSOR

EP 1 653 058 A1

**European Patent Office**

**EUROPEAN SEARCH REPORT**

Application Number

EP 05 01 7968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2004/098978 A1 (TARABULSKI THEODORE J ET AL) 27 May 2004 (2004-05-27)<br>* paragraph [0038] - paragraph [0063] *<br>* paragraph [0057]; figure 1 *<br>----- | 1-3,5,<br>10-13,18<br>6,9 | F01N3/20<br>F01N3/08<br>F01N11/00<br>F02D41/00 |
| Y | DE 103 01 606 A1 (ROBERT BOSCH GMBH) 29 July 2004 (2004-07-29)<br>* paragraph [0019] - paragraph [0041]; figure 1 *<br>----- | 6,9 | |
| X | DE 199 14 787 A1 (TOYOTA JIDOSHA K.K; TOYOTA JIDOSHA K.K., TOYOTA) 14 October 1999 (1999-10-14)<br>* column 4, line 67 - column 11, line 14; figures 1-3 *<br>----- | 1-3,<br>11-13,18 | |
| A | PATENT ABSTRACTS OF JAPAN vol. 2003, no. 12, 5 December 2003 (2003-12-05)<br>& JP 2003 314254 A (MITSUBISHI FUSO TRUCK & BUS CORP), 6 November 2003 (2003-11-06)<br>* abstract; figure 1 *<br>----- | 1,18 | |
| A | DE 199 26 148 A1 (VOLKSWAGEN AG) 14 December 2000 (2000-12-14)<br>* column 1, line 15 - column 2, line 59 *<br>----- | 1,18 | TECHNICAL FIELDS SEARCHED (IPC)<br><br>F01N<br>F02D |

The present search report has been drawn up for all claims

| Place of search | Date of completion of the search | Examiner |
|---|---|---|
| The Hague | 3 February 2006 | Nobre, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 01 7968

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2006

| Patent document cited in search report | | Publication date | Patent family member(s) | | Publication date |
|---|---|---|---|---|---|
| US 2004098978 | A1 | 27-05-2004 | NONE | | |
| DE 10301606 | A1 | 29-07-2004 | NONE | | |
| DE 19914787 | A1 | 14-10-1999 | FR | 2777039 A1 | 08-10-1999 |
| | | | JP | 3277881 B2 | 22-04-2002 |
| | | | JP | 11294145 A | 26-10-1999 |
| JP 2003314254 | A | 06-11-2003 | NONE | | |
| DE 19926148 | A1 | 14-12-2000 | WO | 0077371 A1 | 21-12-2000 |
| | | | EP | 1198666 A1 | 24-04-2002 |
| | | | JP | 2003502554 T | 21-01-2003 |

EPO FORM P0459

For more details about this annex : see Official Journal of the European Patent Office, No. 12/82